# EUROPEAN PATENT APPLICATION

(11) **EP 3 933 510 A1**
(43) Date of publication of application: **05.01.2022**
(21) Application number: 20762301.8
(22) Date of filing: 06.02.2020
(51) Int. Cl.: G03G 21/00, G06Q 10/08, G06Q 50/10, B41J 29/38

(54) **CONSUMABLES ORDERING SYSTEM**

(30) Priority: 28.02.2019 JP 2019036286
(71) Applicant: KYOCERA Document Solutions Inc., Osaka-shi, Osaka 540-8585 (JP)
(72) Inventor: YOSHIDA Naoki, Osaka-shi Osaka 540-8585 (JP); CHIMURA Tetsuyuki, Osaka-shi Osaka 540-8585 (JP); IZUMI Tomoyuki, Osaka-shi Osaka 540-8585 (JP); OYASATO Tomoki, Osaka-shi Osaka 540-8585 (JP); AIBA Masaaki, Osaka-shi Osaka 540-8585 (JP)
(74) Representative: Viering, Jentschura & Partner mbB Patent- und Rechtsanwälte
(86) International application number: PCT/JP2020/004509
(87) International publication number: WO 2020/175073

(57) **Abstract**

In a consumables ordering system, an image forming apparatus notifies a management system about a consumable whose remaining quantity is under a specific threshold. When a consumable whose remaining quantity is under the threshold is autonomously notified from the image forming apparatus, the management system checks the consumable whose remaining quantity is under the threshold in a specific image forming apparatus other than an autonomously notifying apparatus (S122), and notifies the autonomously notifying apparatus about the consumable autonomously notified from the autonomously notifying apparatus, and ordering information as information necessary for placing an order for the consumable checked in S122 (S129). The autonomously notifying apparatus displays the ordering information notified from the management system, and places an order for the consumable for which the ordering information is displayed in response to an instruction.

## Description

### TECHNICAL FIELD

The present disclosure relates to a consumables ordering system for placing an order for a consumable in an electronic apparatus.

### BACKGROUND ART

Conventionally, as a consumables ordering system for placing an order for a consumable in an electronic apparatus, there is known a configuration including an electronic apparatus, and a management system for managing the electronic apparatus (see, for example, Patent Literature 1). In the conventional consumables ordering system, the electronic apparatus notifies the management system about a consumable whose remaining quantity is under a specific threshold. When the consumable whose remaining quantity is under the specific threshold is notified from the electronic apparatus, the management system notifies the electronic apparatus about ordering information as information necessary for placing an order for the consumable notified from the electronic apparatus. Then, the electronic apparatus displays the ordering information notified from the management system, and places an order for the consumable for which the ordering information is displayed.

### CITATION LIST

### PATENT LITERATURE

Patent Literature 1: Japanese Unexamined Patent Application Publication No. 2010-055357

### SUMMARY OF THE INVENTION

### PROBLEMS TO BE SOLVED BY THE INVENTION

However, in the conventional consumables ordering system, when a remaining quantity of a consumable in each of a plurality of electronic apparatuses is under a specific threshold, it is necessary to place an order for each consumable in each of the plurality of electronic apparatuses. This imposes a heavy burden on users in terms of labor, a shipping cost, and the like.

In view of the above, it is an object of the present disclosure to provide a consumables ordering system that can improve convenience when a remaining quantity of a consumable is lowered in each of a plurality of electronic apparatuses.

### MEANS FOR SOLVING THE PROBLEM

A consumables ordering system according to the present disclosure includes: a plurality of electronic apparatuses; and a management system to manage the plurality of electronic apparatuses. The electronic apparatus includes a remaining quantity detection unit to detect a remaining quantity of a consumable in the electronic apparatus itself, and a lowered-remaining-quantity consumables notification unit to notify the management system about the consumable whose remaining quantity detected by the remaining quantity detection unit is under a specific threshold. The management system includes a lowered-remaining-quantity consumables checking unit to check, when the consumable whose remaining quantity is under the threshold is autonomously notified from the electronic apparatus, the consumable whose remaining quantity is under the threshold in the specific electronic apparatus other than the electronic apparatus having autonomously notified, and an ordering information notification unit to notify the autonomously notifying apparatus of the consumable autonomously notified from the autonomously notifying apparatus, and ordering information as information necessary to place an order for the consumable checked by the lowered-remaining-quantity consumables checking unit. The autonomously notifying apparatus includes an ordering information display unit to display the ordering information notified from the management system, and a consumables ordering unit to place an order for the consumable for which the ordering information is displayed by the ordering information display unit in response to an instruction.

With this configuration, when a consumable whose remaining quantity is under a specific threshold is autonomously notified from an autonomously notifying apparatus, the consumables ordering system according to the present disclosure checks the consumable whose remaining quantity is under the specific threshold in a specific electronic apparatus other than the autonomously notifying apparatus, and notifies the autonomously notifying apparatus about the consumable autonomously notified from the autonomously notifying apparatus, and ordering information as information necessary for placing an order for the consumable checked by the specific electronic apparatus other than the autonomously notifying apparatus. Therefore, the consumables ordering system can place an order for a consumable collectively in each of a plurality of electronic apparatuses. Thus, the consumables ordering system according to the present disclosure can improve convenience when a remaining quantity of a consumable is lowered in each of the plurality of electronic apparatuses.

In the consumables ordering system according to the present disclosure, the consumables ordering unit may put, on hold, an order for the consumable for which the ordering information is displayed by the ordering information display unit, in response to an instruction.

In the consumables ordering system according to the present disclosure, the lowered-remaining-quantity consumables notification unit may not autonomously notify the management system about the consumable whose remaining quantity detected by the remaining quantity detection unit is under the threshold, when all consumables whose remaining quantity detected by the remaining quantity detection unit is under the threshold are already notified to the management system.

In the consumables ordering system according to the present disclosure, the specific electronic apparatus may be the electronic apparatus belonging to a same LAN as the autonomously notifying apparatus.

### EFFECT OF THE INVENTION

The consumables ordering system according to the present disclosure can improve convenience when a remaining quantity of a consumable is lowered in each of a plurality of electronic apparatuses.

### BRIEF DESCRIPTION OF THE DRAWINGS

FIG. 1 is a block diagram of a consumables ordering system according to one embodiment of the present disclosure.
FIG. 2 is a block diagram of an image forming apparatus shown in FIG. 1 when the image forming apparatus is an MFP.
FIG. 3 is a block diagram of a management system shown in FIG. 1 when the management system is configured of one computer.
FIG. 4 is a diagram showing one example of management target apparatus information shown in FIG. 3.
FIG. 5 is a diagram showing one example of order URL information shown in FIG. 3.
FIG. 6 is a diagram showing one example of delivery destination information shown in FIG. 3.
FIG. 7 is a diagram showing one example of consumables detail information shown in FIG. 3.
FIG. 8 is a flowchart of an operation of the image forming apparatus shown in FIG. 2 when a remaining quantity of a consumable is under a specific threshold.
FIG. 9 is a flowchart of an operation of the management system shown in FIG. 3 when a consumable ID is autonomously notified from the image forming apparatus.
FIG. 10 is a flowchart of an operation of the image forming apparatus shown in FIG. 2 when checking a remaining quantity of a consumable is requested from the management system.
FIG. 11 is a flowchart of an operation of the image forming apparatus shown in FIG. 2 when an order URL is notified from the management system.
FIG. 12 is a diagram showing one example of an order URL screen including, as an order URL, only an order URL for an autonomously notifying apparatus, which is displayed in the operation shown in FIG. 11.
FIG. 13 is a diagram showing one example of an order URL screen including an order URL for an image forming apparatus other than an autonomously notifying apparatus, which is displayed in the operation shown in FIG. 11.
FIG. 14 is a flowchart of an operation of the image forming apparatus shown in FIG. 2 when an order URL screen is displayed.
FIG. 15 is a flowchart of an operation of the management system shown in FIG. 3 when an order URL is notified from the image forming apparatus.
FIG. 16 is a diagram showing one example of a single order screen displayed in the operation shown in FIG. 14.
FIG. 17 is a diagram showing one example of a multiple order screen displayed in the operation shown in FIG. 14.
FIG. 18 is a flowchart of a part of an operation of the image forming apparatus shown in FIG. 2 when a consumables order screen is displayed.
FIG. 19 is a flowchart following the flowchart shown in FIG. 18.
FIG. 20 is a flowchart following the flowchart shown in FIG. 19.
FIG. 21 is a diagram showing one example of an individual order screen displayed in the operations shown in FIGS. 18 to 20.

### MODE FOR CARRYING OUT THE INVENTION

In the following, an embodiment according to the present disclosure is described with reference to the drawings.

First, a configuration of a consumables ordering system according to one embodiment of the present disclosure is described.

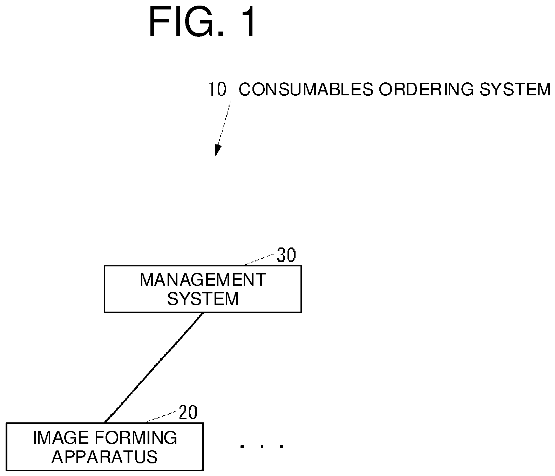

FIG. 1 is a block diagram of a consumables ordering system 10 according to the present embodiment.

As shown in FIG. 1, the consumables ordering system 10 is provided with an image forming apparatus 20 as an electronic apparatus. The image forming apparatus 20 is configured, for example, of a multifunction peripheral (MFP), a printer dedicated machine, a copy dedicated machine, and the like. In addition to the image forming apparatus 20, the consumables ordering system 10 can be provided with at least one image forming apparatus similar to the image forming apparatus 20. Identification information (hereinafter, referred to as an "apparatus ID") such as, for example, a serial number is attached to the image forming apparatus in the consumables ordering system 10.

The consumables ordering system 10 includes a management system 30 for managing the image forming apparatus in the consumables ordering system 10. The management system 30 may be configured of one computer or a plurality of computers.

The image forming apparatus in the consumables ordering system 10, and the management system 30 can communicate with each other via a network such as a local area network (LAN) or the Internet, or directly by wired or wireless means without a network.

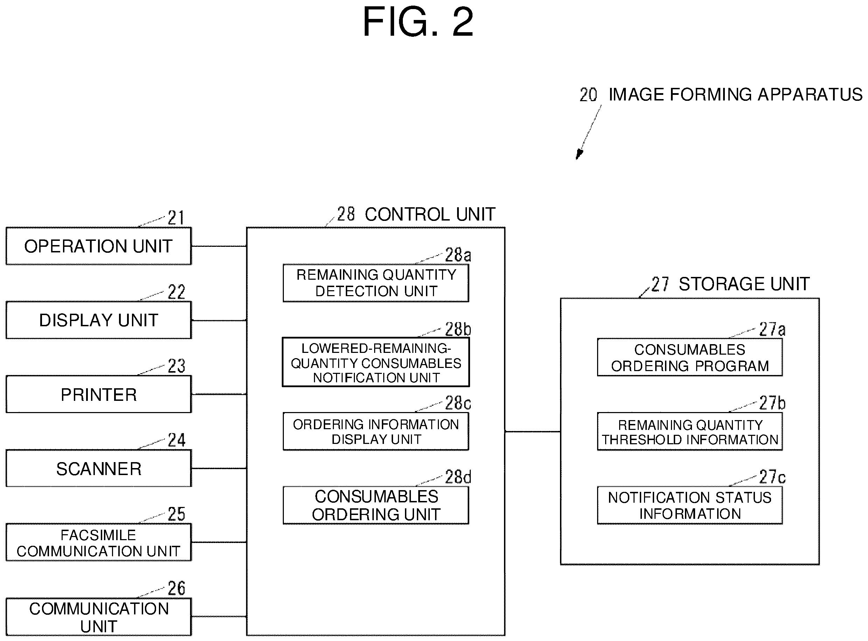

FIG. 2 is a block diagram of the image forming apparatus 20 when the image forming apparatus 20 is an MFP.

As shown in FIG. 2, the image forming apparatus 20 includes an operation unit 21, which is an input device such as, for example, a button through which various operations are input, a display unit 22, which is a display device such as, for example, a liquid crystal display (LCD) for displaying various pieces of information, a printer 23, which is a printing device for printing an image on a recording medium such as paper, a scanner 24, which is a reading device for reading an image from a document, a facsimile communication unit 25, which is a facsimile device for performing facsimile communication with an unillustrated external facsimile device via a communication line such as a public telephone line, a communication unit 26, which is a communication device for communicating with an external device via a network such as a LAN or the Internet, or directly by wired or wireless means without a network, a storage unit 27, which is a non-volatile storage device such as, for example, a semiconductor memory or a hard disk drive (HDD) for storing various types of information, and a control unit 28 for controlling the entirety of the image forming apparatus 20.

Consumables in the image forming apparatus 20 include, for example, toner, recording media, staples, and the like used in the printer 23. Identification information (hereinafter, referred to as a "consumable ID") is attached to a consumable. For example, for toner, a consumable ID is attached to each toner container for accommodating toner.

The storage unit 27 can store a consumables ordering program 27a for placing an order for a consumable. The consumables ordering program 27a may, for example, be installed in the image forming apparatus 20 at a manufacturing stage of the image forming apparatus 20, or may be additionally installed in the image forming apparatus 20 from an external storage medium such as a universal serial bus (USB) memory, or may be additionally installed in the image forming apparatus 20 from a network.

The storage unit 27 stores remaining quantity threshold information 27b indicating a threshold of a remaining quantity for each consumable in the image forming apparatus 20.

The storage unit 27 stores notification status information 27c indicating, for each consumable in the image forming apparatus 20, whether lowering of a remaining quantity is already notified to the management system 30.

The control unit 28 includes, for example, a central processing unit (CPU), a read only memory (ROM) for storing a program and various types of data, and a random access memory (RAM), which is a volatile storage device used as a work area of the CPU of the control unit 28. The CPU of the control unit 28 executes a program stored in the storage unit 27 or in the ROM of the control unit 28.

The control unit 28 achieves, by executing the consumables ordering program 27a, a remaining quantity detection unit 28a for detecting a remaining quantity of a consumable in the image forming apparatus 20, a lowered-remaining-quantity consumables notification unit 28b for notifying the management system 30 about a consumable whose remaining quantity detected by the remaining quantity detection unit 28a is under a specific threshold, an ordering information display unit 28c for displaying, on the display unit 22, ordering information notified from the management system 30, and a consumables ordering unit 28d for placing an order for a consumable for which ordering information is displayed by the ordering information display unit 28c in response to an instruction.

The remaining quantity detection unit 28a detects, for example, a remaining quantity of a consumable in the image forming apparatus 20 by using an unillustrated sensor.

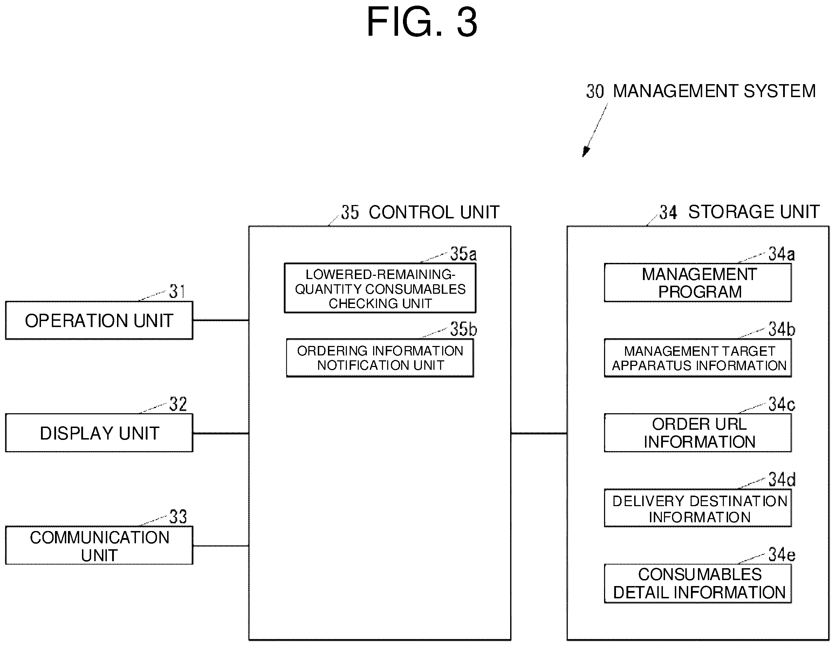

FIG. 3 is a block diagram of the management system 30 when the management system 30 is configured of one computer.

As shown in FIG. 3, the management system 30 includes an operation unit 31, which is an operation device such as, for example, a keyboard and a mouse through which various operations are input, a display unit 32, which is a display device such as, for example, an LCD for displaying various pieces of information, a communication unit 33, which is a communication device for performing communication with an external device via a network such as a LAN or the Internet, or directly by wired or wireless means without a network, a storage unit 34, which is a non-volatile storage device such as, for example, a semiconductor memory or an HDD for storing various types of information, and a control unit 35 for controlling the entirety of the management system 30.

The storage unit 34 stores a management program 34a for managing the image forming apparatus in the consumables ordering system 10. The management program 34a may, for example, be installed in the management system 30 at a manufacturing stage of the management system 30, or may be additionally installed in the management system 30 from an external storage medium such as a compact disk (CD), a digital versatile disk (DVD), or a USB memory, or may be additionally installed in the management system 30 from a network.

The storage unit 34 stores management target apparatus information 34b indicating various types of information of the image forming apparatus to be managed.

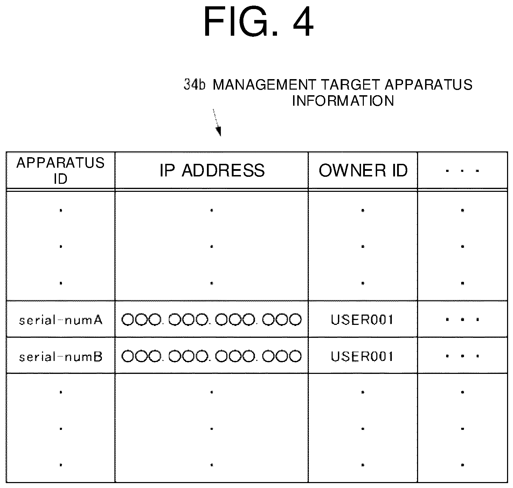

FIG. 4 is a diagram showing one example of the management target apparatus information 34b.

As shown in FIG. 4, the management target apparatus information 34b includes, for each image forming apparatus, an apparatus ID, an internet protocol (IP) address of the image forming apparatus, and identification information (hereinafter, referred to as an "owner ID") of an owner of the image forming apparatus.

As shown in FIG. 3, the storage unit 34 stores order URL information 34c indicating an order URL as a uniform resource locator (URL) for placing an order for a consumable.

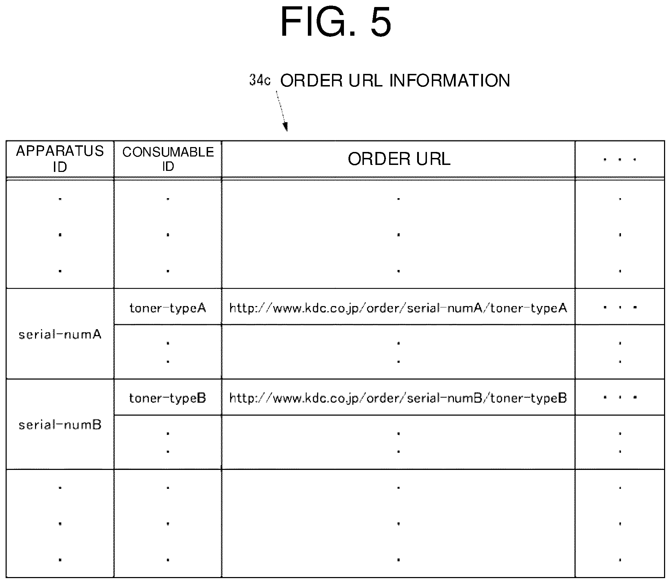

FIG. 5 is a diagram showing one example of the order URL information 34c.

As shown in FIG. 5, the order URL information 34c indicates an order URL for each combination of an apparatus ID and a consumable ID.

As shown in FIG. 3, the storage unit 34 stores delivery destination information 34d indicating a delivery destination of a consumable.

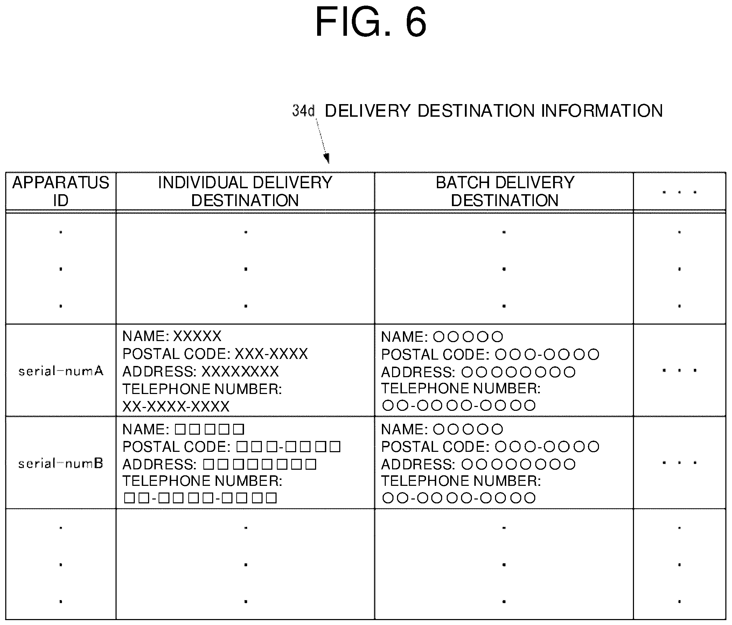

FIG. 6 is a diagram showing one example of the delivery destination information 34d.

As shown in FIG. 6, the delivery destination information 34d includes, for each apparatus ID, an individual delivery destination as a delivery destination set for each image forming apparatus, and a batch delivery destination as a delivery destination set for each owner of an image forming apparatus. The delivery destination is indicated, for example, by a name, a postal code, an address, and a telephone number.

As shown in FIG. 3, the storage unit 34 stores consumables detail information 34e indicating detail information on a consumable.

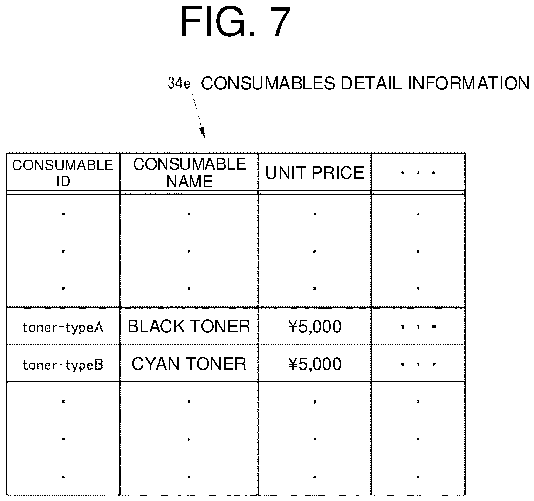

FIG. 7 is a diagram showing one example of the consumables detail information 34e.

As shown in FIG. 7, the consumables detail information 34e includes, for each consumable ID, for example, a consumable name as a name of a consumable, and a unit price of the consumable.

The control unit 35 shown in FIG. 3 includes, for example, a CPU, a ROM for storing a program and various types of data, and a RAM as a memory used as a work area of the CPU of the control unit 35. The CPU of the control unit 35 executes a program stored in the storage unit 34 or in the ROM of the control unit 35.

The control unit 35 achieves, by executing the management program 34a, a lowered-remaining-quantity consumables checking unit 35a for checking, when a consumable whose remaining quantity is under a specific threshold is autonomously notified from an image forming apparatus, a consumable whose remaining quantity is under the threshold in a specific image forming apparatus other than an autonomously notifying apparatus as the image forming apparatus, and an ordering information notification unit 35b for notifying the autonomously notifying apparatus about the consumable autonomously notified from the autonomously notifying apparatus, and ordering information as information necessary for placing an order for the consumable checked by the lowered-remaining-quantity consumables checking unit 35a.

Next, an operation of the consumables ordering system 10 is described.

First, an operation of the image forming apparatus when a remaining quantity of a consumable is under a specific threshold is described. In the following, description is made by using the image forming apparatus 20 as an example of an image forming apparatus. However, all image forming apparatuses in the consumables ordering system 10 are operated in a similar manner.

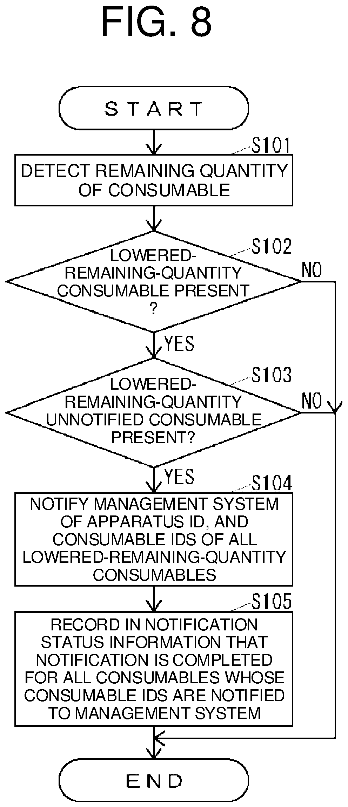

FIG. 8 is a flowchart of an operation of the image forming apparatus 20 when a remaining quantity of a consumable is under a specific threshold.

The control unit 28 of the image forming apparatus 20 repeatedly performs the operation shown in FIG. 8 at a specific timing.

As shown in FIG. 8, the remaining quantity detection unit 28a detects a remaining quantity of a consumable in the image forming apparatus 20 (S101).

Next, the lowered-remaining-quantity consumables notification unit 28b determines, from among the consumables in the image forming apparatus 20, whether there is a consumable (hereinafter, referred to as a "lowered-remaining-quantity consumable), whose remaining quantity detected in S101 is under the threshold indicated in the remaining quantity threshold information 27b regarding the consumable itself (S102).

When the lowered-remaining-quantity consumables notification unit 28b determines in S102 that there is a lowered-remaining-quantity consumable, the lowered-remaining-quantity consumables notification unit 28b determines, based on the notification status information 27c, whether there is a consumable (hereinafter, referred to as a "lowered-remaining-quantity unnotified consumable"), whose lowering of a remaining quantity is not notified to the management system 30 from among the lowered-remaining-quantity consumables in the image forming apparatus 20 (S103).

When the lowered-remaining-quantity consumables notification unit 28b determines in S103 that there is a lowered-remaining-quantity unnotified consumable, the lowered-remaining-quantity consumables notification unit 28b notifies the management system 30 of the apparatus ID of the image forming apparatus 20, and the consumable IDs of all the lowered-remaining-quantity consumables (S104). As a notification method in S104, for example, there is a notification by e-mail. When the lowered-remaining-quantity consumables notification unit 28b notifies the management system 30 of the apparatus ID of the image forming apparatus 20, and the consumable ID of the lowered-remaining-quantity consumable by e-mail, the lowered-remaining-quantity consumables notification unit 28b may also notify an administrator of the image forming apparatus 20, and an administrator of the management system 30, about the apparatus ID of the image forming apparatus 20, and the consumable ID of the lowered-remaining-quantity consumable by e-mail.

After the processing of S104, the lowered-remaining-quantity consumables notification unit 28b records, in the notification status information 27c, that lowering of a remaining quantity is already notified to the management system 30 regarding all the consumables for which a consumable ID is notified to the management system 30 in S104 (S105).

When the lowered-remaining-quantity consumables notification unit 28b determines in S102 that there is no lowered-remaining-quantity consumable, or determines in S103 that there is no lowered-remaining-quantity unnotified consumable, or performs the processing of S105, the lowered-remaining-quantity consumables notification unit 28b terminates the operation shown in FIG. 8.

Next, an operation of the management system 30 when a consumable ID is autonomously notified from the image forming apparatus is described.

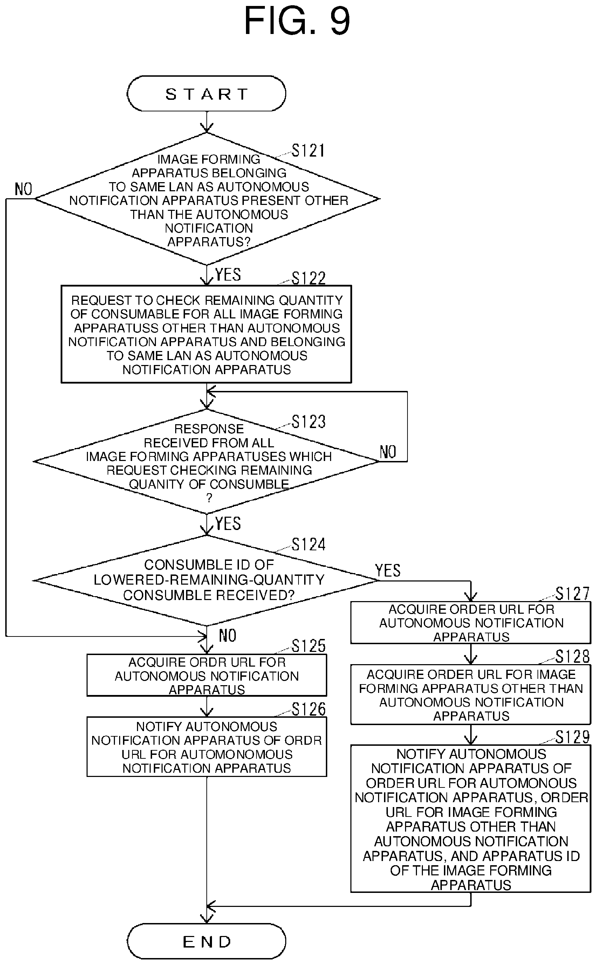

FIG. 9 is a flowchart of an operation of the management system 30 when a consumable ID is autonomously notified from the image forming apparatus.

The control unit 35 of the management system 30 performs the operation shown in FIG. 9 when a consumable ID is autonomously notified from the image forming apparatus.

As shown in FIG. 9, the lowered-remaining-quantity consumables checking unit 35a determines whether there is an image forming apparatus whose consumable ID is autonomously notified, specifically, an image forming apparatus other than an autonomously notifying apparatus and belonging to the same LAN as the autonomously notifying apparatus (S121). Note that the lowered-remaining-quantity consumables checking unit 35a can determine an image forming apparatus belonging to the same LAN, based on an IP address in the management target apparatus information 34b.

When the lowered-remaining-quantity consumables checking unit 35a determines in S121 that there is an image forming apparatus other than an autonomously notifying apparatus and belonging to the same LAN as the autonomously notifying apparatus, the lowered-remaining-quantity consumables checking unit 35a requests all the image forming apparatuses other than the autonomously notifying apparatus and belonging to the same LAN as the autonomously notifying apparatus to check a remaining quantity of a consumable (S122).

Herein, an operation of the image forming apparatus when checking a remaining quantity of a consumable is requested from the management system 30 is described. In the following, description is made by using the image forming apparatus 20 as an example of an image forming apparatus. However, all image forming apparatuses in the consumables ordering system 10 are operated in a similar manner.

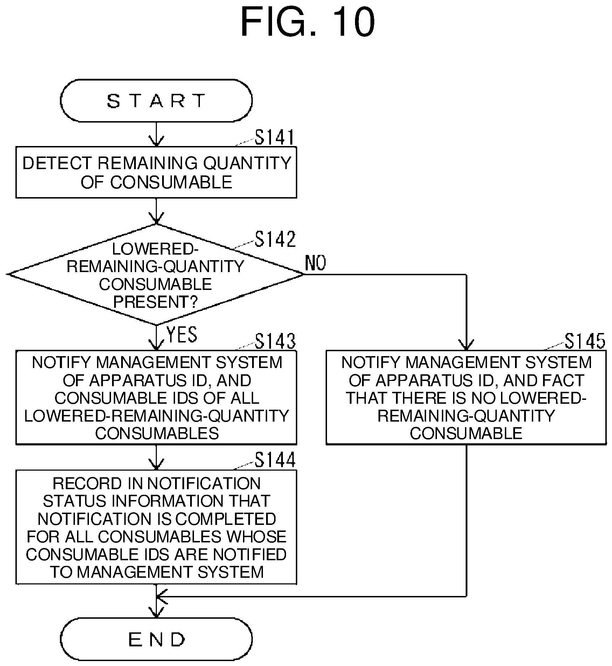

FIG. 10 is a flowchart of an operation of the image forming apparatus 20 when checking a remaining quantity of a consumable is requested from the management system 30.

When the control unit 28 of the image forming apparatus 20 is requested from the management system 30 to check a remaining quantity of a consumable, the operation shown in FIG. 10 is performed.

As shown in FIG. 10, the remaining quantity detection unit 28a detects a remaining quantity of a consumable in the image forming apparatus 20 (S141).

Next, the lowered-remaining-quantity consumables notification unit 28b determines, from among the consumables in the image forming apparatus 20, whether there is a consumable whose remaining quantity detected in S141 is under the threshold indicated in the remaining quantity threshold information 27b regarding the consumable itself, specifically, whether there is a lowered-remaining-quantity consumable (S142).

When the lowered-remaining-quantity consumables notification unit 28b determines in S142 that there is a lowered-remaining-quantity consumable, the lowered-remaining-quantity consumables notification unit 28b notifies the management system 30 about the apparatus ID of the image forming apparatus 20, and the consumable IDs of all the lowered-remaining-quantity consumables as a response to the request in S122 (S143).

After the processing of S143, the lowered-remaining-quantity consumables notification unit 28b records, in the notification status information 27c, that lowering of a remaining quantity is already notified to the management system 30 regarding all the consumables for which a consumable ID is notified to the management system 30 in S143 (S144), and terminates the operation shown in FIG. 10.

When the lowered-remaining-quantity consumables notification unit 28b determines in S142 that there is no lowered-remaining-quantity consumable, the lowered-remaining-quantity consumables notification unit 28b notifies the management system 30 about the apparatus ID of the image forming apparatus 20, and a fact that there is no lowered-remaining-quantity consumable as a response to the request in S122 (S145), and terminates the operation shown in FIG. 10.

As shown in FIG. 9, after the processing of S122, the lowered-remaining-quantity consumables checking unit 35a of the management system 30 checks whether a response to the request in S122 is received from all the image forming apparatuses which request checking a remaining quantity of a consumable in S122 until the lowered-remaining-quantity consumables checking unit 35a determines that a response to the request in S122 is received from all the image forming apparatuses which request checking a remaining quantity of a consumable in S122 (S123).

When the lowered-remaining-quantity consumables checking unit 35a determines in S123 that a response to the request in S122 is received from all the image forming apparatuses which request checking a remaining quantity of a consumable in S122, the lowered-remaining-quantity consumables checking unit 35a determines whether a consumable ID of a lowered-remaining-quantity consumable is received from the image forming apparatus which requests checking a remaining quantity of a consumable in S122 (S124).

When the ordering information notification unit 35b determines in S121 that there is no image forming apparatus other than an autonomously notifying apparatus and belonging to the same LAN as the autonomously notifying apparatus, or determines in S124 that a consumable ID of a lowered-remaining-quantity consumable is not received from the image forming apparatus which requests checking a remaining quantity of a consumable in S122, the ordering information notification unit 35b acquires, from the order URL information 34c, an order URL for the autonomously notifying apparatus, as ordering information, based on a combination of the apparatus ID of the autonomously notifying apparatus, and the consumable IDs of all the lowered-remaining-quantity consumables in the autonomously notifying apparatus (S125).

Next, the ordering information notification unit 35b notifies the autonomously notifying apparatus of the order URL for the autonomously notifying apparatus acquired in S125 (S126), and terminates the operation shown in FIG. 9.

When the ordering information notification unit 35b determines in S124 that a consumable ID of a lowered-remaining-quantity consumable is received from the image forming apparatus which requests checking a remaining quantity of a consumable in S122, the ordering information notification unit 35b acquires, from the order URL information 34c, an order URL for the autonomously notifying apparatus, as ordering information, based on a combination of the apparatus ID of the autonomously notifying apparatus, and the consumable IDs of all the lowered-remaining-quantity consumables in the autonomously notifying apparatus (S127).

Next, the ordering information notification unit 35b acquires, from the order URL information 34c, an order URL for an image forming apparatus other than the autonomously notifying apparatus, as ordering information, based on a combination of the apparatus ID of the image forming apparatus which notifies a consumable ID of a lowered-remaining-quantity consumable, and the consumable IDs of all the lowered-remaining-quantity consumables in the image forming apparatus from among the image forming apparatuses which request checking a remaining quantity of a consumable in S122 (S128).

Next, the ordering information notification unit 35b notifies the autonomously notifying apparatus of the order URL for the autonomously notifying apparatus, which is acquired in S127, the order URL for the image forming apparatus other than the autonomously notifying apparatus, which is acquired in S128, and the apparatus ID of the image forming apparatus (S129), and terminates the operation shown in FIG. 9.

Next, an operation of the image forming apparatus when an order URL is notified from the management system 30 is described. In the following, description is made by using the image forming apparatus 20 as an example of an image forming apparatus. However, all image forming apparatuses in the consumables ordering system 10 are operated in a similar manner.

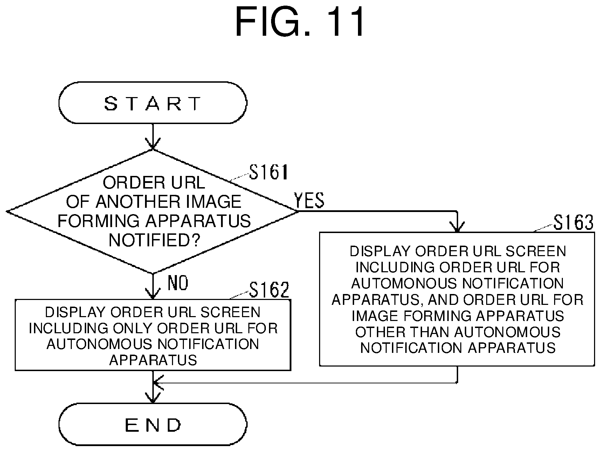

FIG. 11 is a flowchart of an operation of the image forming apparatus 20 when an order URL is notified from the management system 30.

The control unit 28 of the image forming apparatus 20 performs the operation shown in FIG. 11 when an order URL is notified from the management system 30.

As shown in FIG. 11, the ordering information display unit 28c determines whether an order URL for an image forming apparatus other than the image forming apparatus 20, specifically, an order URL for another image forming apparatus is notified from the management system 30 (S161).

When the ordering information display unit 28c determines in S161 that an order URL for another image forming apparatuses is not notified from the management system 30, the ordering information display unit 28c displays, on the display unit 22, an order URL screen including, as an order URL, the order URL for the image forming apparatus 20, which is received from the management system 30, specifically, only the order URL for the autonomously notifying apparatus (S162), and terminates the operation shown in FIG. 11.

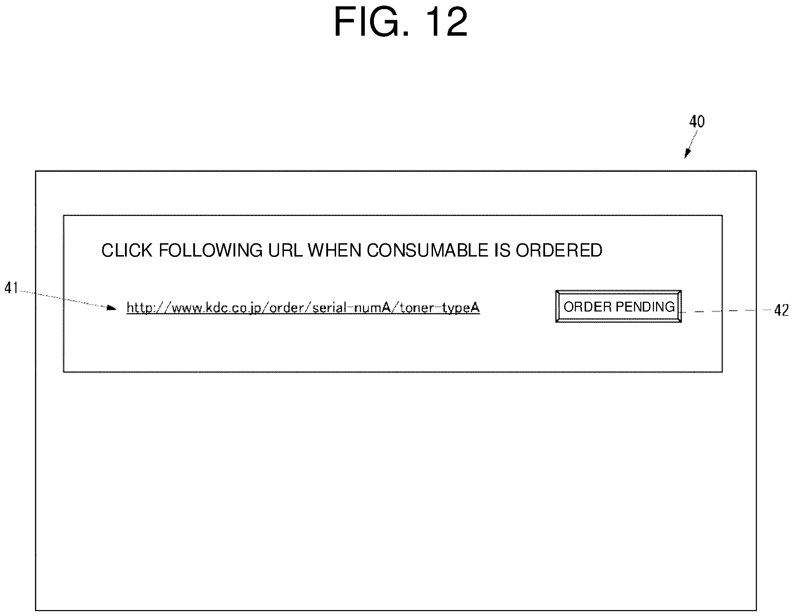

FIG. 12 is a diagram showing one example of an order URL screen 40 including, as an order URL, only an order URL for an autonomously notifying apparatus.

As shown in FIG. 12, the order URL screen 40 includes an order URL 41 for the image forming apparatus 20, and an order pending button 42 located in association with the order URL 41 and used for putting an order on hold. In FIG. 12, only one order URL for the image forming apparatus 20 is displayed. However, the order URL screen 40 can include an order URL for each lowered-remaining-quantity consumable, and can include an order pending button for each lowered-remaining-quantity consumable, specifically, for each order URL.

As shown in FIG. 11, when the ordering information display unit 28c determines in S161 that an order URL for another image forming apparatus is notified from the management system 30, the ordering information display unit 28c displays, on the display unit 22, an order URL screen including the order URL for the image forming apparatus 20, which is received from the management system 30, specifically, the order URL for the autonomously notifying apparatus, and the order URL for the another image forming apparatus other than the autonomously notifying apparatus (S163), and terminates the operation shown in FIG. 11.

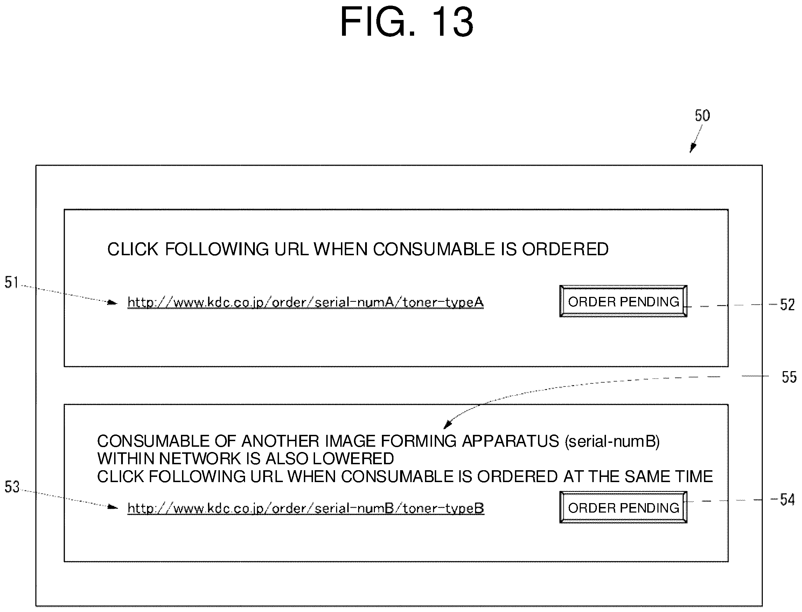

FIG. 13 is a diagram showing one example of an order URL screen 50 including an order URL for an image forming apparatus other than an autonomously notifying apparatus.

As shown in FIG. 13, the order URL screen 50 includes an order URL 51 for the image forming apparatus 20, an order pending button 52 located in association with the order URL 51 and used for putting an order on hold, an order URL 53 for an image forming apparatus other than the image forming apparatus 20, and an order pending button 54 located in association with the order URL 53 and used for putting an order on hold. In FIG. 13, only one order URL for the image forming apparatus 20, and only one order URL for an image forming apparatus other than the image forming apparatus 20 are displayed. However, the order URL screen 50 can include an order URL for each lowered-remaining-quantity consumable, and can include an order pending button for each lowered-remaining-quantity consumable, specifically, for each order URL. Note that the order URL screen 50 also includes an apparatus ID 55 of an image forming apparatus associated with the order URL 53. The apparatus ID 55 is notified from the management system 30 in S129.

Next, an operation of the image forming apparatus when an order URL screen is displayed is described. In the following, description is made by using the image forming apparatus 20 as an example of an image forming apparatus. However, all image forming apparatuses in the consumables ordering system 10 are operated in a similar manner.

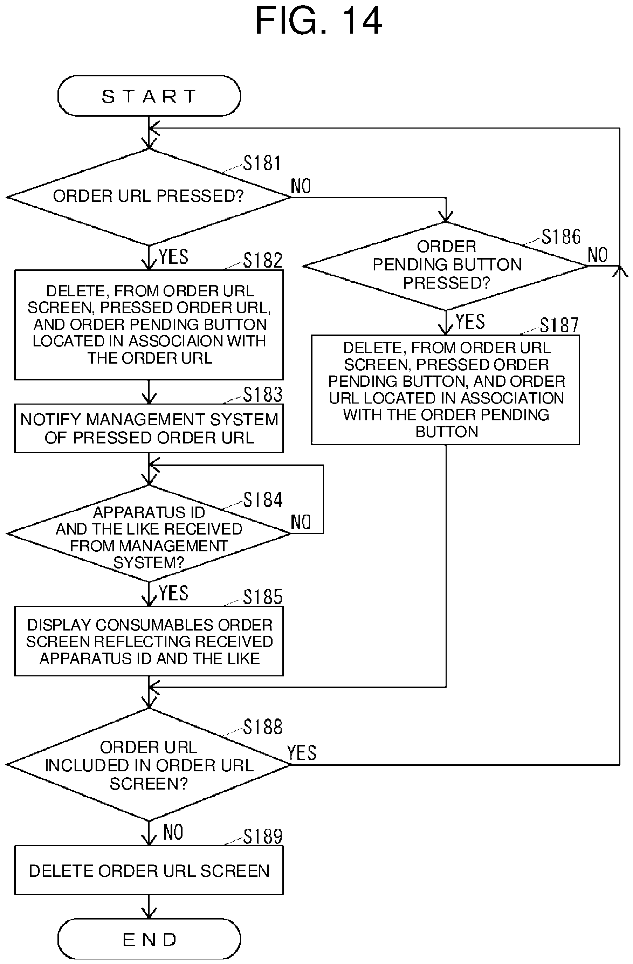

FIG. 14 is a flowchart of an operation of the image forming apparatus 20 when an order URL screen is displayed.

The control unit 28 of the image forming apparatus 20 performs the operation shown in FIG. 14 when an order URL screen is displayed on the display unit 22.

As shown in FIG. 14, the consumables ordering unit 28d determines whether an order URL is pressed in an order URL screen (S181).

When the consumables ordering unit 28d determines in S181 that an order URL is pressed, the consumables ordering unit 28d deletes, from the order URL screen, the order URL determined to be pressed in S181, and the order pending button located in association with the order URL (S182).

Next, the consumables ordering unit 28d notifies the management system 30 about the order URL which is determined to be pressed in S181 (S183).

Herein, an operation of the management system 30 when an order URL is notified from the image forming apparatus is described.

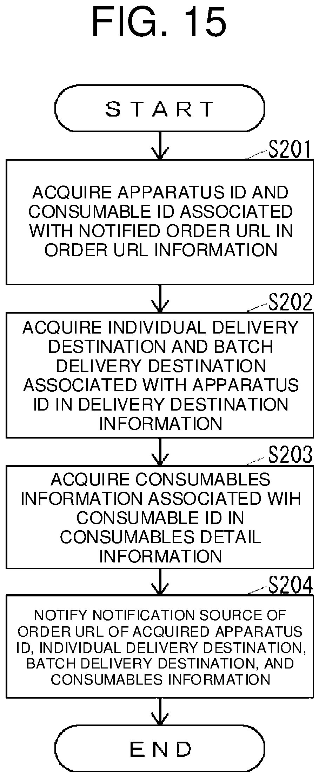

FIG. 15 is a flowchart of an operation of the management system 30 when an order URL is notified from the image forming apparatus.

The control unit 35 of the management system 30 performs the operation shown in FIG. 15 when an order URL is notified from the image forming apparatus.

As shown in FIG. 15, the ordering information notification unit 35b acquires an apparatus ID and a consumable ID associated with the order URL notified from the image forming apparatus in the order URL information 34c (S201).

Next, the ordering information notification unit 35b acquires an individual delivery destination and a batch delivery destination associated with the apparatus ID acquired in S201 in the delivery destination information 34d (S202).

Next, the ordering information notification unit 35b acquires consumables information associated with the consumable ID acquired in S201 in the consumables detail information 34e (S203).

Next, the ordering information notification unit 35b notifies the image forming apparatus, which is a notification source, of the order URL of the apparatus ID acquired in S201, the individual delivery destination and the batch delivery destination acquired in S202, and the consumables information acquired in S203 (S204), and terminates the operation shown in FIG. 15.

As shown in FIG. 14, after the processing of S183, the consumables ordering unit 28d determines whether an apparatus ID, an individual delivery destination, a batch delivery destination, and consumables information are received from the management system 30 until the consumables ordering unit 28d determines that the apparatus ID, the individual delivery destination, the batch delivery destination, and the consumables information are received from the management system 30 (S184).

When the consumables ordering unit 28d determines in S184 that an apparatus ID, an individual delivery destination, a batch delivery destination, and consumables information are received from the management system 30, the consumables ordering unit 28d displays, on the display unit 22, a consumables order screen for placing an order for a consumable, which reflects the apparatus ID, the individual delivery destination, the batch delivery destination, and the consumables information, which are determined to be received from the management system 30 in S184 (S185).

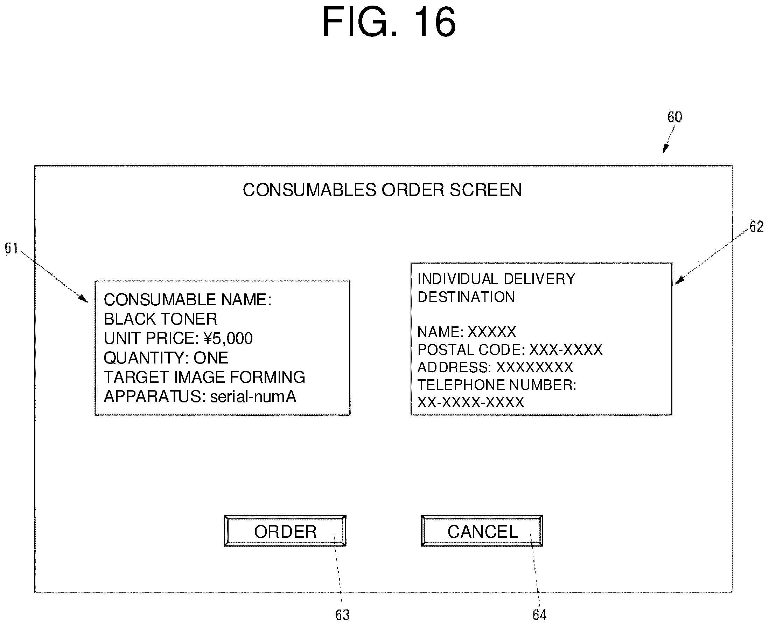

FIG. 16 is a diagram showing one example of a single order screen 60 as a consumables order screen including only information on one consumable.

As shown in FIG. 16, the single order screen 60 includes information 61 on a consumable, an individual delivery destination 62 of the consumable indicated by the information 61, an order button 63 for placing an order for the consumable indicated by the information 61, and a cancel button 64 for canceling the order for the consumable. The information 61 includes a name of the consumable, a unit price of the consumable, and an apparatus ID of a target image forming apparatus.

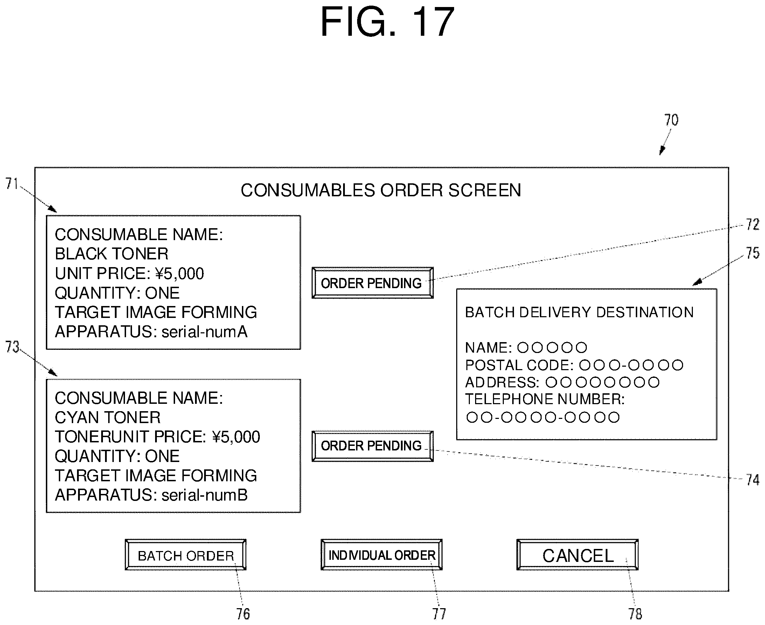

FIG. 17 is a diagram showing one example of a multiple order screen 70 as a consumables order screen including information on a plurality of consumables.

As shown in FIG. 17, the multiple order screen 70 includes information 71 on a first consumable, an order pending button 72 for putting, on hold, an order for the consumable indicated by the information 71, information 73 on a second consumable, an order pending button 74 for putting, on hold, an order for the consumable indicated by the information 73, a batch delivery destination 75 of the consumables indicated by the information 71 and the information 73, a batch order button 76 for placing a batch order for the consumables indicated by the information 71 and the information 73, an individual order button 77 for individually placing an order for the consumables indicated by the information 71 and the information 73, and a cancel button 78 for canceling the order for the consumables.

Note that the multiple order screen 70 shown in FIG. 17 is a consumables order screen including information on two consumables. However, the same applies to a consumables order screen including information on three or more consumables.

As shown in FIG. 14, when the consumables ordering unit 28d determines in S181 that the order URL is not pressed, the consumables ordering unit 28d determines whether the order pending button is pressed in the order URL screen (S186).

When the consumables ordering unit 28d determines in S186 that the order pending button is not pressed, the consumables ordering unit 28d performs the processing of S181.

When the consumables ordering unit 28d determines in S186 that the order pending button is pressed, the consumables ordering unit 28d deletes, from the order URL screen, the order pending button determined to be pressed in S186, and an order URL located in association with the order pending button (S187).

After the processing of S185 or S187 is terminated, the consumables ordering unit 28d determines whether an order URL is included in the order URL screen (S188).

When the consumables ordering unit 28d determines in S188 that an order URL is included in the order URL screen, the consumables ordering unit 28d performs the processing of S181.

When the consumables ordering unit 28d determines in S188 that an order URL is not included in the order URL screen, the consumables ordering unit 28d deletes the order URL screen (S189), and terminates the operation shown in FIG. 14.

Next, an operation of the image forming apparatus when a consumables order screen is displayed is described. In the following, description is made by using the image forming apparatus 20 as an example of an image forming apparatus. However, all image forming apparatuses in the consumables ordering system 10 are operated in a similar manner.

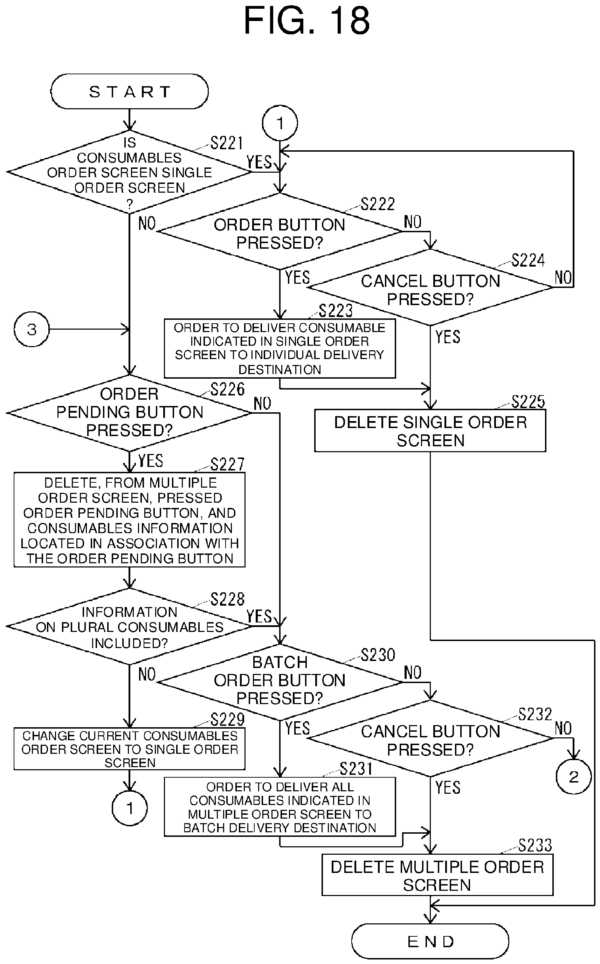

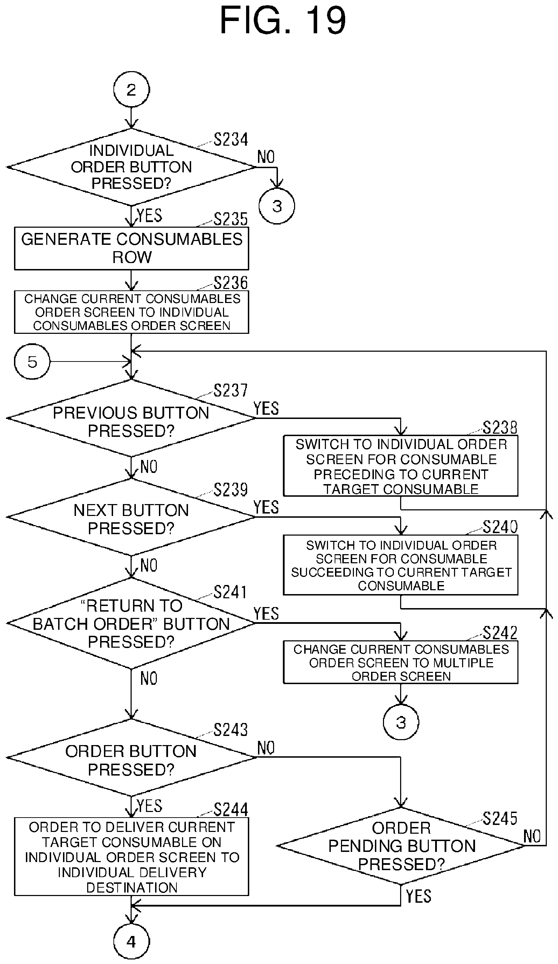

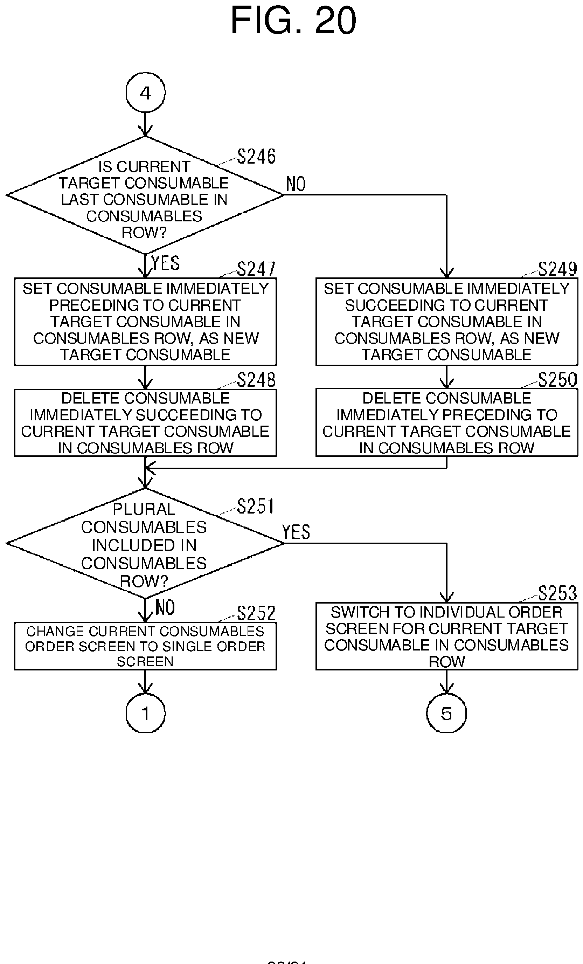

FIGS. 18 to 20 are flowcharts of an operation of the image forming apparatus 20 when a consumables order screen is displayed.

The control unit 28 of the image forming apparatus 20 performs the operations shown in FIGS. 18 to 20 when a consumables order screen is displayed on the display unit 22.

As shown in FIGS. 18 to 20, the consumables ordering unit 28d determines whether a consumables order screen displayed on the display unit 22 is a single order screen (S221).

When the consumables ordering unit 28d determines in S221 that the screen is a single order screen, the consumables ordering unit 28d determines whether the order button is pressed on the single order screen (S222).

When the consumables ordering unit 28d determines in S222 that the order button is pressed, the consumables ordering unit 28d orders the unillustrated ordering management system to deliver a consumable indicated in the single order screen to an individual delivery destination indicated in the single order screen (S223).

When the consumables ordering unit 28d determines in S222 that the order button is not pressed, the consumables ordering unit 28d determines whether the cancel button is pressed in the single order screen (S224).

When the consumables ordering unit 28d determines in S224 that the cancel button is not pressed, the consumables ordering unit 28d performs the processing of S222.

When the consumables ordering unit 28d determines in S224 that the processing of S223 is terminated, or the cancel button is pressed, the consumables ordering unit 28d deletes the single order screen (S225), and terminates the operation shown in FIGS. 18 to 20.

When the consumables ordering unit 28d determines in S221 that the screen is not a single order screen, the consumables ordering unit 28d determines whether the order pending button is pressed in the multiple order screen (S226).

When the consumables ordering unit 28d determines in S226 that the order pending button is pressed, the consumables ordering unit 28d deletes, from the multiple order screen, the order pending button, and consumables information located in association with the order pending button (S227).

Next, the consumables ordering unit 28d determines whether the current consumables order screen includes information on a plurality of consumables (S228).

When the consumables ordering unit 28d determines in S228 that the current consumables order screen does not include information on a plurality of consumables, the consumables ordering unit 28d changes the current consumables order screen to a single order screen (S229), and performs the processing of S222.

When the consumables ordering unit 28d determines in S226 that the order pending button is not pressed, or determines in S228 that the current consumables order screen includes information on a plurality of consumables, the consumables ordering unit 28d determines whether the batch order button is pressed in the multiple order screen (S230).

When the consumables ordering unit 28d determines in S230 that the batch order button is pressed, the consumables ordering unit 28d orders the unillustrated ordering management system to deliver all the consumables indicated in the multiple order screen to the batch delivery destination indicated in the multiple order screen (S231).

When the consumables ordering unit 28d determines in S230 that the batch order button is not pressed, the consumables ordering unit 28d determines whether the cancel button is pressed on the multiple order screen (S232).

When the consumables ordering unit 28d determines in S232 that the processing of S231 is terminated, or the cancel button is pressed, the consumables ordering unit 28d deletes the multiple order screen (S233), and terminates the operations shown in FIGS. 18 to 20.

When the consumables ordering unit 28d determines in S232 that the cancel button is not pressed, the consumables ordering unit 28d determines whether the individual order button is pressed in the multiple order screen (S234).

When the consumables ordering unit 28d determines in S234 that the individual order button is not pressed, the consumables ordering unit 28d performs the processing of S226.

When the consumables ordering unit 28d determines in S234 that the individual order button is pressed, the consumables ordering unit 28d generates a row (hereinafter, referred to as a "consumables row") constituted of a plurality of consumables indicated in the current multiple order screen (S235).

Next, the consumables ordering unit 28d changes the current consumables order screen to an individual order screen as a consumables order screen for individually placing an order for a plurality of consumables included in the consumables row generated in S235 (S236). Herein, a consumable indicated in the individual order screen displayed in S236 is a leading consumable in the consumables row generated in S235.

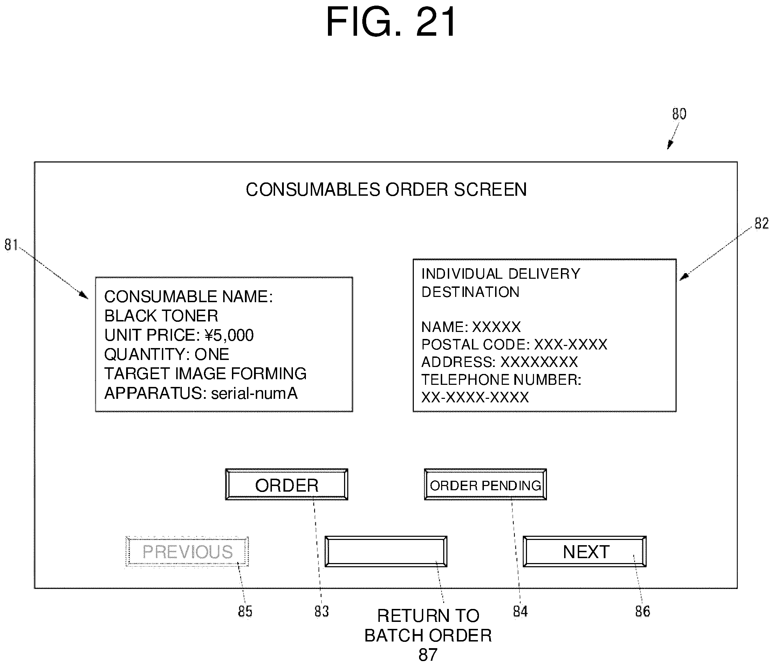

FIG. 21 is a diagram showing one example of an individual order screen 80.

As shown in FIG. 21, the individual order screen 80 includes information 81 on a consumable, an individual delivery destination 82 for the consumable indicated by the information 81, an order button 83 for placing an order for the consumable indicated by the information 81, an order pending button 84 for cancelling an order for the consumable indicated by the information 81, a previous button 85 for switching to an individual order screen for a consumable preceding a current target consumable in the consumables row, a next button 86 for switching to an individual order screen for a consumable succeeding a current target consumable in the consumables row, and a "return to batch order" button 87 for returning to a batch order. Note that, when a current target consumable is a leading consumable in the consumables row, the individual order screen 80 becomes inoperable in such a way that the previous button 85 is grayed out or the like. Likewise, when a current target consumable is a last consumable in the consumables row, the individual order screen 80 becomes inoperable in such a way that the next button 86 is grayed out or the like. In the example shown in FIG. 21, the previous button 85 is grayed out.

As shown in FIGS. 18 to 20, after the processing of S236, the consumables ordering unit 28d determines whether the previous button is pressed in the individual order screen (S237).

When the consumables ordering unit 28d determines in S237 that the previous button is pressed, the consumables ordering unit 28d switches the current consumables order screen to an individual order screen for a consumable preceding a current target consumable in the consumables row (S238), and performs the processing of S237.

When the consumables ordering unit 28d determines in S237 that the previous button is not pressed, the consumables ordering unit 28d determines whether the next button is pressed in the individual order screen (S239).

When the consumables ordering unit 28d determines in S239 that the next button is pressed, the consumables ordering unit 28d switches the current consumables order screen to an individual order screen for a consumable succeeding a current target consumable in the consumables row (S240), and performs the processing of S237.

When the consumables ordering unit 28d determines in S239 that the next button is not pressed, the consumables ordering unit 28d determines whether the "return to batch order" button is pressed in the individual order screen (S241).

When the consumables ordering unit 28d determines in S241 that the "return to batch order" button is pressed, the consumables ordering unit 28d changes the current consumables order screen to a multiple order screen (S242), and performs the processing of S226. Note that the multiple order screen to be changed in S242 is a consumables order screen for a consumable included in the current consumables row.

When the consumables ordering unit 28d determines in S241 that the "return to batch order" button is not pressed, the consumables ordering unit 28d determines whether the order button is pressed in the individual order screen (S243).

When the consumables ordering unit 28d determines in S243 that the order button is pressed, the consumables ordering unit 28d orders the unillustrated ordering management system to deliver the current target consumable in the individual order screen to the individual delivery destination indicated in the individual order screen (S244).

When the consumables ordering unit 28d determines in S243 that the order button is not pressed, the consumables ordering unit 28d determines whether the order pending button is pressed in the individual order screen (S245).

When the consumables ordering unit 28d determines in S245 that the order pending button is not pressed, the consumables ordering unit 28d performs the processing of S237.

When the consumables ordering unit 28d determines in S245 that the processing of S244 is terminated, or the order pending button is pressed, the consumables ordering unit 28d determines whether the current target consumable in the consumable row is the last consumable (S246).

When the consumables ordering unit 28d determines in S246 that the current target consumable in the consumables row is the last consumable, the consumables ordering unit 28d sets a consumable immediately preceding the current target consumable in the consumables row, as a new target consumable (S247), and deletes the consumable immediately succeeding the current target consumable in the consumables row, specifically, the last consumable (S248).

When the consumables ordering unit 28d determines in S246 that the current target consumable in the consumables row is not the last consumable, the consumables ordering unit 28d sets a consumable immediately succeeding the current target consumable in the consumables row, as a new target consumable (S249), and deletes the consumable immediately preceding the current target consumable in the consumables row (S250).

After the processing of S248 or S250, the consumables ordering unit 28d determines whether the consumables row includes a plurality of consumables (S251).

When the consumables ordering unit 28d determines in S251 that the consumables row does not include a plurality of consumables, the consumables ordering unit 28d changes the current consumables order screen to a single order screen (S252), and performs the processing of S222. Note that the single order screen to be changed in S252 is a consumables order screen for a current target consumable in the consumables row.

When the consumables ordering unit 28d determines in S251 that the consumables row includes a plurality of consumables, the consumables ordering unit 28d switches the current consumables order screen to an individual order screen for a current target consumable in the consumables row (S253), and performs the processing of S237.

Next, an operation of the image forming apparatus when a consumable is replaced is described. In the following, description is made by using the image forming apparatus 20 as an example of an image forming apparatus. However, all image forming apparatuses in the consumables ordering system 10 are operated in a similar manner.

When a consumable is replaced, the lowered-remaining-quantity consumables notification unit 28b of the image forming apparatus 20 records, in the notification status information 27c, a fact that lowering of a remaining quantity of the replaced consumable is not notified to the management system 30.

Even when a consumable is not replaced, the lowered-remaining-quantity consumables notification unit 28b can record, in the notification status information 27c, a fact that lowering of a remaining quantity is not notified to the management system 30 regarding a specific consumable in response to an instruction via the operation unit 21 or the communication unit 26.

As described above, when a consumable whose remaining quantity is under a specific threshold is autonomously notified from an autonomously notifying apparatus in S104, the consumables ordering system 10 checks the consumable whose remaining quantity is under the specific threshold in a specific image forming apparatus other than the autonomously notifying apparatus (S122), and notifies the autonomously notifying apparatus about the consumable autonomously notified from the autonomously notifying apparatus, and ordering information as information necessary for placing an order for the consumable checked for the specific image forming apparatus other than the autonomously notifying apparatus (S129). Therefore, the consumables ordering system 10 can place an order for a consumable collectively in each of a plurality of image forming apparatuses. Thus, the consumables ordering system 10 can improve convenience when a remaining quantity of a consumable is lowered in each of the plurality of image forming apparatuses.

The consumables ordering system 10 puts, on hold, an order for a consumable for which ordering information is displayed, in response to an instruction ("YES in S186 and S187", "YES in S224 and S225", "YES in S226 and S227", "YES in S232 and S233", "YES in S245 and S248" or "YES in S245 and S250"). Therefore, the number of consumables to be collectively ordered can be increased, and consequently, convenience can be improved.

In the consumables ordering system 10, an image forming apparatus does not autonomously notify the management system 30 about a consumable, when the image forming apparatus already notifies the management system 30 about all consumables whose remaining quantity is under a specific threshold (NO in S103). Therefore, it is possible to reduce a possibility that the image forming apparatus autonomously and repeatedly notifies the management system 30 of the same consumable. Consequently, it is possible to reduce the number of times ordering formation is displayed by the image forming apparatus. Thus, the consumables ordering system 10 can improve convenience.

When a consumable whose remaining quantity is under a specific threshold is autonomously notified from an autonomously notifying apparatus in S104, the consumables ordering system 10 checks the consumable whose remaining quantity is under the specific threshold in another image forming apparatus belonging to the same LAN as the autonomously notifying apparatus (S122). Therefore it is possible to improve convenience when a remaining quantity of a consumable is lowered in each of a plurality of image forming apparatuses belonging to the same LAN.

Note that, when a consumable whose remaining quantity is under a specific threshold is autonomously notified from an autonomously notifying apparatus, the consumables ordering system 10 may employ an image forming apparatus selected under a condition other than a condition that an image forming apparatus belongs to the same LAN as the autonomously notifying apparatus, as an image forming apparatus which checks the consumable whose remaining quantity is under the specific threshold. For example, the consumables ordering system 10 may check a consumable whose remaining quantity is under a specific threshold in another image forming apparatus owned by the same owner as an autonomously notifying apparatus, when the consumable whose remaining quantity is under the specific threshold is autonomously notified from the autonomously notifying apparatus.

In the present embodiment, an electronic apparatus according to the present disclosure is an image forming apparatus. Alternatively, the electronic apparatus may be an electronic apparatus other than an image forming apparatus, such as, for example, a personal computer (PC).

## Claims

1. A consumables ordering system comprising:
a plurality of electronic apparatuses; and
a management system to manage the plurality of electronic apparatuses, wherein
the electronic apparatus includes
a remaining quantity detection unit to detect a remaining quantity of a consumable in the electronic apparatus itself, and
a lowered-remaining-quantity consumables notification unit to notify the management system about the consumable whose remaining quantity detected by the remaining quantity detection unit is under a specific threshold,
the management system includes
a lowered-remaining-quantity consumables checking unit to check, when the consumable whose remaining quantity is under the threshold is autonomously notified from the electronic apparatus, the consumable whose remaining quantity is under the threshold in the specific electronic apparatus other than the electronic apparatus having autonomously notified, and
an ordering information notification unit to notify the autonomously notifying apparatus about the consumable autonomously notified from the autonomously notifying apparatus, and ordering information as information necessary to place an order for the consumable checked by the lowered-remaining-quantity consumables checking unit, and
the autonomously notifying apparatus includes
an ordering information display unit to display the ordering information notified from the management system, and
a consumables ordering unit to place an order for the consumable for which the ordering information is displayed by the ordering information display unit in response to an instruction.

2. The consumables ordering system according to claim 1, wherein
the consumables ordering unit puts, on hold, an order for the consumable for which the ordering information is displayed by the ordering information display unit, in response to an instruction.

3. The consumables ordering system according to claim 1, wherein
the lowered-remaining-quantity consumables notification unit does not autonomously notify the management system about the consumable whose remaining quantity detected by the remaining quantity detection unit is under the threshold, when all consumables whose remaining quantity detected by the remaining quantity detection unit is under the threshold are already notified to the management system.

4. The consumables ordering system according to claim 1, wherein
the specific electronic apparatus is the electronic apparatus belonging to a same LAN as the autonomously notifying apparatus.
